# EUROPÄISCHE PATENTSCHRIFT

(11) **EP 1 909 005 B1**
(45) Veröffentlichungstag und Bekanntmachung des Hinweises auf die Patenterteilung: **20.10.2010**
(21) Anmeldenummer: 07113680.8
(22) Anmeldetag: 02.08.2007
(51) Int. Cl.: F16K 1/226, F02D 9/10, B29C 45/00

(54) **Drosselklappenvorrichtung für eine Verbrennungskraftmaschine**
Throttle valve unit for a combustion engine
Dispositif de vanne papillon pour un moteur à combustion interne

(30) Priorität: 26.09.2006 DE 102006045420
(43) Veröffentlichungstag der Anmeldung: 09.04.2008
(73) Patentinhaber: Pierburg GmbH, 41460 Neuss (DE)
(72) Erfinder: Kühnel, Hans-Ulrich, 41239, Mönchengladbach (DE); Sanders, Michael, 41564, Kaarst (DE); Thönneßen, Dieter, 41751, Viersen (DE)
(74) Vertreter: Patentanwälte ter Smitten

(56) Entgegenhaltungen:
- EP-A1- 0 471 270
- WO-A-03/019055
- DE-A1- 19 840 887
- GB-A- 2 092 714
- US-A- 3 475 007
- US-A- 3 945 398
- US-A- 4 284 264

## Beschreibung

Die Erfindung betrifft eine Drosselklappenvorrichtung für eine Verbrennungskraftmaschine mit einem Gehäuse, in dem ein Fluid durchströmbarer Kanal ausgebildet ist, in welchem ein Drosselkörper angeordnet ist, welcher um eine Drehachse schwenkbar ist, welche den Drosselkörper in zwei Drosselflügel teilt, wobei der Drosselkörper über eine Stellvorrichtung in Drehung versetzbar ist, wodurch der Drosselkörper gegen eine Sitzfläche, die durch eine Innenwand des Gehäuses gebildet ist, und von der Sitzfläche weg drehbar ist, wobei die Drehachse axial zum Drosselkörper versetzt angeordnet ist, so dass ein erster Drosselflügel beim Öffnen des Kanals in zur Drehachse entgegen gesetzter Richtung schwenkt und ein zweiter Drosselflügel in Richtung zur Drehachse schwenkt, wobei eine radiale Umfangsfläche des Drosselkörpers zumindest abschnittsweise kugelschnittförmig ausgebildet ist, so dass der Drosselkörper in der den Kanal verschließenden Position mit seiner kugelschnittförmigen Umfangsfläche umlaufend gegen die Sitzfläche, die durch eine Innenwand des Kanal bildenden Gehäuses gebildet ist, anliegt und dass sich in einem Abschnitt der Querschnitt des Fluid durchströmbaren Kanals in axialer Richtung von der Sitzfläche zur Drehachse erweitert und sich in einem Abschnitt an der zur Drehachse entgegen gesetzten Seite des Drosselkörpers im geschlossenen Zustand der Querschnitt des Kanals in Richtung zur Drehachse an der Seite des ersten Flügels erweitert.

Derartige Drosselklappenvorrichtungen können verschiedene Funktionen in einer Verbrennungskraftmaschine erfüllen. Insbesondere sind hier Drosselklappenstutzen zur Ansaugluftmengenregulierung zu nennen, aber auch Abgasklappen, Kühlerbypässe, Abgasrückführventile oder Saugrohrklappen können derartig aufgebaut sein. In modernen Verbrennungskraftmaschinen wächst dabei ständig die Forderung nach einem möglichst dichten Verschluss des Fluid durchströmten Kanals durch den entsprechenden Drosselkörper. Um eine derartige Dichtigkeit zu erreichen, ist es beispielsweise bekannt, sowohl die Gehäuse als auch die Klappen sehr genau zu bearbeiten oder aber den Drosselkörper oder den Ventilsitz mit Dichtmassen einzusprühen bzw. mit einem Dichtring zu versehen. Dies erfordert jedoch einen sehr hohen Herstellungsaufwand und ist somit mit hohen Kosten verbunden.

Entsprechend wird in der EP 0 482 272 B1 eine montagegespritzte Drosselklappenvorrichtung offenbart, bei der die Klappe im geschlossenen Zustand, das heißt über ihren Umfang am äußeren Gehäuse anliegend, gespritzt wird. Hierdurch soll eine optimierte Dichtheit durch die Klappe im Kanal erreicht werden, ohne zusätzliche Bauteile oder Bearbeitungen vornehmen zu müssen.

Des Weiteren ist es aus der DE 10 2005 023 613 B3 bekannt, einen montagegespritzten Drosselklappenstutzen derartig herzustellen, dass das außen liegende Gehäuse möglichst rotationssymmetrisch aufgebaut wird, wodurch ein Verziehen des äußeren Gehäuses bei Wärmeeinwirkung vermieden wird. Auf diese Weise kann auch beim Spritzen der Drosselklappe und der Drosselklappenwelle im geöffneten Zustand eine hohe Dichtigkeit beim Verschluss des Kanals erreicht werden.

Aus der DE 198 40 887 A1 ist eine Drosselklappenvorrichtung mit den Merkmalen des Oberbegriffs bekannt., Der Kanal weist eine Erweiterung auf, die sich in der geschlossenen Stellung der Klappe von kurz vor bis kurz hinter die Klappe erstreckt. Bei einem radialen Versatz der Drehachse wäre eine derartige Klappe nicht aus der geschlossenen Stellung heraus bewegbar. Des Weiteren ist eine genaue Regelung der Fluidmenge bei kleinen Stellwinkeln nicht möglich.

Eine weitere Drosselklappenvorrichtung mit zur Klappe axial versetzter Drehachse wird in der US 3,475,007 beschrieben. Diese weist einen nachträglich angeformten Ventilsitz auf, der sich im Bereich eines ersten Flügels in Richtung zur Drehachse erweitert und im Bereich eines zweiten Flügels in Richtung zur Drehachse verengt. Eine Herstellung einer solchen Klappe durch Montagespritzen ist entsprechend nicht möglich.

Zusätzlich ist aus der EP 0 471 270 A1 eine radial und axial zur Drehachse versetzte Klappe bekannt, welche jedoch an einem flexiblen Ventilsitz aufliegt, wodurch die Bewegung aus der geschlossenen Stellung erst möglich wird.

Diese montagegespritzten Klappen weisen jedoch den Nachteil auf, dass eine Steuerung der Fluidmenge insbesondere bei kleinen Verstellwinkeln aus dem geschlossenen Zustand nur sehr schwer möglich ist, da bereits bei geringem Öffnungswinkel eine relativ große freie Querschnittsfläche entsteht. Es sind daher bei anderen Anwendungen, insbesondere Drosselklappenstutzen aus Metall, verschiedene Maßnahmen bekannt, um die Kennlinien der Klappen in diesem Bereich zu verbessern. Insbesondere werden hier Kugelzonen am Gehäuse hergestellt. Das Herstellen derartiger Kugelzonen ist jedoch bei den bekannten montagegespritzten Drosselklappenstutzen aufgrund der vorhandenen Hinterschnitte und damit nicht durchführbaren Entformung nicht möglich.

Daher ist es Aufgabe der Erfindung, eine Drosselklappenvorrichtung zu schaffen, welche einerseits einen dichten Verschluss des Kanals durch die Klappe ohne zusätzliche Anbauteile ermöglicht und andererseits im kostengünstigen Montagespritzverfahren herstellbar ist, wobei insbesondere ohne zusätzliche Bearbeitung des Gehäuses kennlinienformende Maßnahmen am Gehäuse realisiert werden sollen.

Diese Aufgabe wird dadurch gelöst, dass die Drehachse radial zur Mitte des Drosselkörpers versetzt angeordnet ist und die radiale Umfangsfläche linienförmig gegen die Sitzfläche 8 anliegt. Durch den axialen und radialen Versatz der Welle zum Drosselkörper und gleichzeitige Ausbildung der Kugelschnittform der Umfangsfläche wird es möglich, einen dichten Verschluss über den Umfang des Drosselkörpers zu erhalten, wobei der Drosselkörper mit der Welle oder entsprechenden Wellenstümpfen im Gehäuse montagegespritzt werden kann, da durch einen derartigen Aufbau jegliche Hinterschnitte vermieden werden können und somit eine Entformung möglich wird. Es handelt sich somit um eine doppelte Exzentrizität der Klappe bezüglich der Welle. Auch bei einer solchen Ausführung ist eine Formgebung des Kanals möglich, bei der eine Entformung des Gehäuses beim Spritzgießen gewährleistet ist. Zusätzlich erweitert sich in einem Abschnitt der Querschnitt des Fluid durchströmten Kanals in axialer Richtung von der Sitzfläche zur Drehachse. Wird nun auf eine folgende Verengung des Kanals verzichtet, entsteht eine einfache Entformbarkeit beim Spritzgießen des Gehäuses, da der Querschnitt des Kanals zu einer Seite wächst. Des Weiteren wird durch diese Maßnahme ist sichergestellt, dass keine vorherige Berührung des Drosselklappenkörpers an der Innenwand des Gehäuses erfolgt. Des Weiteren erweitert sich in einem Abschnitt an der zur Drehachse entgegen gesetzten Seite des Drosselkörpers im geschlossenen Zustand der Querschnitt des Kanals in Richtung zur Drehachse an der Seite des ersten Flügels. Dies führt zu einer guten Einstellbarkeit der Fluidmenge im leicht geöffneten Zustand des Drosselkörpers

Vorzugsweise entsprechen die vorgenannten Abschnitte dem axial durchfahrenen Bereich bei Drehbewegung des Drosselkörpers aus der Schließstellung um 10° Drehwinkel. Durch eine solche Maßnahme wird bei entsprechender Auslegung die genaue Dosierung des Fluidstromes auch bei geringem Drehwinkel der Klappe aus dem geschlossenen Zustand erreicht. Es wird somit hierdurch die Funktion einer aus anderen Anwendungen bekannten Kugelzone erreicht.

Vorzugsweise ist der Drosselkörper mit einer Welle oder zwei gegenüberliegenden Wellenstümpfen im Kanal bildenden Gehäuse im zumindest teilweise geöffneten Zustand montagegespritzt. Eine derartige Vorrichtung weist eine hohe Dichtigkeit im Bereich der Lager auf und ist kostengünstig herstellbar.

In einer weiterführenden Ausführungsform ist der Drosselkörper in Schließstellung senkrecht zur Kanalachse angeordnet, so dass die gesamten 90° Drehwinkel zur Einstellung der gewünschten Größe des Fluidstromes zur Verfügung stehen.

In einer bevorzugten Ausführung ist der Drosselkörper einstückig mit zwei Wellenstümpfen hergestellt, die in zwei Lagerstellen des Gehäuses gelagert sind, wobei die Wellenstümpfe derartig geformt sind, dass der Drosselkörper mit den im Kanal liegenden Abschnitten der Wellenstümpfe bei einem Schnitt entlang einer Schnittebene, die in Höhe der Drehachse senkrecht durch den Drosselkörper erfolgt, im wesentlichen U-förmig ausgebildet ist. Durch eine derartige Ausführung wird der Strömungswiderstand der Drosselklappenvorrichtung im geöffneten oder teilweise geöffneten Zustand reduziert.

Durch diese Maßnahmen wird somit eine Drosselklappenvorrichtung geschaffen, welche einen dichten Verschluss in der Schließstellung des Drosselkörpers sicherstellt und gleichzeitig eine hohe Genauigkeit bei der Regelung des Fluidstromes sicherstellt, ohne Hinterschnitte bei der Form des Gehäuses aufzuweisen.

Zwei Ausführungsbeispiele erfindungsgemäßer Drosselklappenvorrichtungen sind in den Zeichnungen dargestellt und werden nachfolgend beschrieben.
Figur 1 zeigt eine Seitenansicht einer ersten erfindungsgemäßen Drosselklappenvorrichtung in geschnittener Darstellung, wobei sowohl die vollständig geschlossene als auch die geöffnete Stellung sowie die Konturlinie der Klappenbewegung in der Figur dargestellt sind.
Figur 2 zeigt einen Ausschnitt des ersten Drosselflügels der Drosselklappenvorrichtung aus der Figur 1 in geschlossener Stellung.
Figur 3 zeigt den entsprechenden Ausschnitt des gegenüberliegenden Drosselflügels der Drosselklappenvorrichtung aus der Figur 1 in geschlossener Stellung.
Figur 4 zeigt eine Seitenansicht einer zweiten erfindungsgemäßen Drosselklappenvorrichtung im geschlossenen Zustand in geschnittener Darstellung.
Figur 5 zeigt eine dreidimensionale Ansicht des Drosselklappenstutzens aus der Figur 4.
Figur 6 zeigt eine Seitenansicht des Drosselklappenstutzens aus der Figur 5, mit teilweise geöffnetem Drosselkörper.
Figur 7 zeigt eine dreidimensionale Darstellung der Drosselklappenvorrichtung gemäß der Figur 6.
Figur 8 zeigt eine Seitenansicht der Drosselklappenvorrichtung gemäß der Figur 4, mit einem Drosselkörper in vollständig geöffneter Stellung.
Figur 9 zeigt eine dreidimensionale Darstellung der Drosselklappenvorrichtung gemäß der Figur 8.

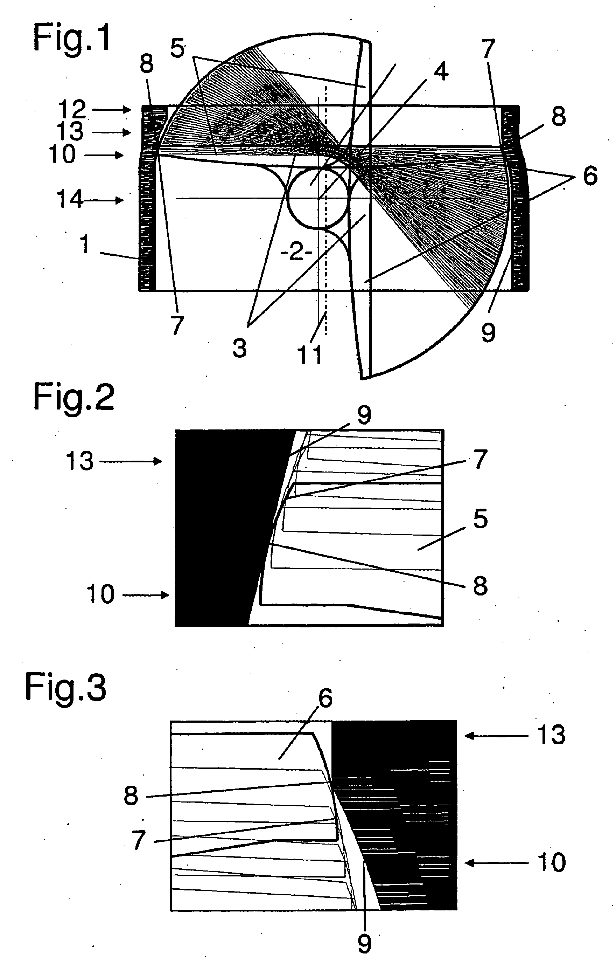

Die in den Figuren 1 bis 9 dargestellten erfindungsgemäßen Drosselklappenvorrichtungen bestehen jeweils aus einem Gehäuse 1, welches im wesentlichen rotationssymmetrisch ausgebildet ist und in dessen Innern ein von einem Fluid durchströmbarer Kanal 2 durch das Gehäuse 1 gebildet wird. In diesem Fluid durchströmten Kanal 2 ist ein zweiflügeliger Drosselkörper 3 angeordnet ist, der um eine Drehachse 4 schwenkbar ist.

In der Figur 1 ist der Drosselkörper 3 sowohl in der den Kanal 2 vollständig verschließenden Stellung als auch vollständig freigebenden Stellung dargestellt. Des Weiteren ist die Kontur der Bewegungslinie beim Öffnen dargestellt.

Der Drosselkörper 3 besteht aus einem ersten Flügel 5 und einem zweiten Flügel 6, welche in der Darstellung links bzw. rechts von der Drehachse 4 angeordnet sind, so dass bei Drehung des Drosselkörpers 3 aus der geschlossenen Stellung der erste Flügel 5 entsprechend der Figur 1 nach oben gedreht wird und der zweite Flügel 6 nach unten, also zur Drehachse, gedreht wird.

Im vorliegenden Ausführungsbeispiel bestehen diese beiden Flügel 5, 6 somit aus unterschiedlichen Kreisausschnitten, welche gemeinsam einen Kreis einheitlichen Durchmessers bilden, da die Drehachse 4 im Kanal sowohl zum Drosselkörper 3 axial versetzt angeordnet ist als auch radial versetzt zur Mitte des Drosselkörpers 3 angeordnet ist. Der Drosselkörper 3 weist eine radiale Umfangsfläche 7 auf, welche kugelschnittförmig ausgebildet ist. Dies bedeutet, dass die radiale Umfangsfläche 7 einen Radius aufweist, der beispielsweise etwa im Bereich der Drehachse 4 des Drosselkörpers 3 angeordnet sein kann. Auch andere Radien können für die Umfangsfläche 7 bei entsprechender Anpassung des Gehäuses 1 gewählt werden, wobei vom Mittelpunkt des Drosselkörpers 3 aus betrachtet der Umfang des Drosselkörpers 3 an der von der Drehachse 4 entfernten Seite immer kleiner sein muss als an der zur Drehachse gelegenen Seite des Drosselkörpers 3.

Im den Kanal 2 verschließenden Zustand liegt der Drosselkörper 3 mit seiner radialen Umfangsfläche 7 gegen eine Sitzfläche 8, die durch eine Innenwand 9 des Kanal 2 bildenden Gehäuses 1 gebildet wird, an. Insbesondere in den Figuren 2 und 3 ist zu erkennen, dass es sich hierbei um eine Linienberührung zwischen Sitzfläche 8 und Umfangsfläche 7 handelt.

In den Figuren 2 und 3 ist des Weiteren dargestellt, wie sich die radiale Umfangsfläche 7 bei Drehung des Drosselkörpers 3 von der Innenwand 9 des Gehäuses 1 entfernt. Um eine derartige Bewegung des zweiten Flügels 6 sicherstellen zu können, weist der Kanal 2 einen Abschnitt 10 mit sich in Richtung zur Drehachse 4 erweiternden Querschnitts auf. Dass dies zur Bewegung des Drosselkörpers 3 notwendig ist, wird insbesondere aus der Figur 3 deutlich, da sich der zweite Flügel 6 im ersten Drehwinkelbereich beim Drehen zunächst leicht von einer Kanalachse 11 entfernt. Der sich erweiternde Abschnitt 10 im Bereich des zweiten Flügels 6 sollte insbesondere so ausgebildet sein, dass eine genaue Einstellung des Fluidstroms bei Drehung des Flügels 6 erreicht wird, also die Funktion einer Kugelzone eines bekannten Drosselklappenstutzens nachgebildet wird. Der Abschnitt 10 erstreckt sich etwa von der Sitzfläche 8 bis in Höhe der Drehachse 4, was zumindest einem Bereich entsprechen sollte, der bei einer Drehung von ca. 10° aus der geschlossenen Stellung vom Drosselkörper 3 axial überstrichen wird.

Der Fluid durchströmte Kanal 2 weist entsprechend zur sicheren Funktionsweise, aber auch zur genauen Steuerung der durchgesetzten Fluidmenge Abschnitte unterschiedlich wachsenden Querschnitts auf. In dem zur Drehachse 4 entgegengesetzten Bereich des Drosselkörpers 3 weist der Kanal zunächst einen ersten Abschnitt 12 mit engerem Querschnitt auf. Dieser erweitert sich zunächst in einem zweiten Abschnitt 13 an der zum ersten Flügel 5 gelegenen Seite in Richtung zur Drehachse 4 geringfügig, während die zum Flügel 6 gerichtete Seite des Kanals 2 weiterhin von einer weitestgehend geraden Wand begrenzt wird. Dieser Abschnitt 13 dient insbesondere dazu, bei Drehwinkeln von bis zu mindestens 10° aus der geschlossenen Stellung des Drosselklappenkörpers 3 eine genaue Dosierung der geförderten Fluidmenge zu gewährleisten und somit wiederum der gleichen Funktion wie die aus anderen Anmeldungen bekannten Kugelzonen in Drosselklappenstutzen. Begrenzt wird dieser Abschnitt 13 durch die Sitzfläche 8, gegen die der Drosselkörper 3 bzw. seine radiale Umfangsfläche 7 im geschlossenen Zustand anliegt.

An die Sitzfläche 8 in Richtung Drehachse 4 schließt sich der bereits beschriebene sich erweiternde dritte Abschnitt 10 an, der insbesondere auf der zum zweiten Flügel 6 gewandten Seite ausgebildet sein muss. Gegebenenfalls kann auch, wie im Ausführungsbeispiel gemäß der Figur 1, auf der zum ersten Flügel 5 gelegenen Seite eine weitere Erweiterung stattfinden. Dieser sich erweiternde Abschnitt 10 zieht sich etwa bis in Höhe der Drehachse 4, und geht von hier aus in einen vierten Abschnitt 14 über, der einen etwa konstant großen Querschnitt aufweist.

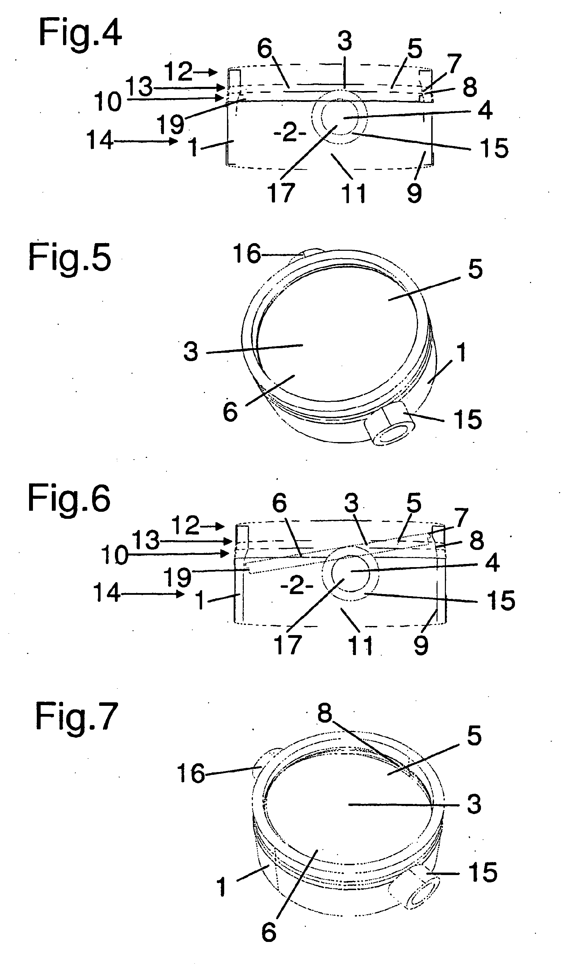

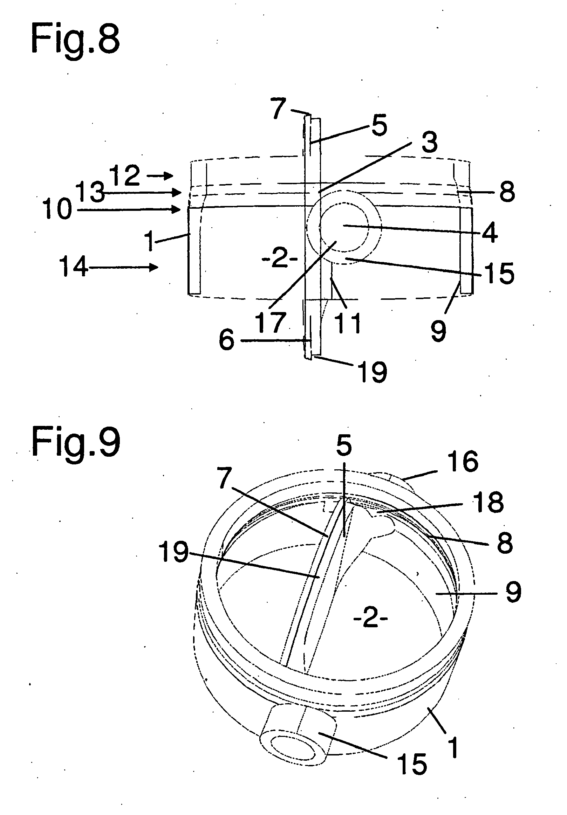

In den Figuren 4 bis 9 ist eine weitere erfindungsgemäße Drosselklappenvorrichtung dargestellt, wobei der Drosselkörper 3 in den Figuren 4 und 5 im geschlossenen Zustand dargestellt ist, in den Figuren 6 und 7 im leicht geöffneten Zustand, also bei einer Drehung um etwa 10° sowie in den Figuren 8 und 9 im geöffneten Zustand. Der Drosselkörper 3 weist auch hier eine kugelschnittförmige Umfangsfläche 7 auf, an die sich jedoch in Richtung zur Drehachse 4 hin eine weitere gerade Umfangsfläche 19 kleineren Durchmessers anschließt. Im Vergleich zu den Figuren 1 bis 3 ist im vorliegenden Ausführungsbeispiel die Drehachse 4 zur entgegengesetzten Seite, also nach rechts versetzt, angeordnet. Es ist des Weiteren zu erkennen, dass das Gehäuse 1 etwa rotationssymmetrisch ausgebildet ist, wodurch ein Verzug durch Wärme oder dergleichen deutlich reduziert wird.

Am Gehäuse 1 sind an entgegengesetzten Seiten zwei Lagerstellen 15, 16 angeordnet, in denen zwei den Drosselkörper 3 tragende Wellenstümpfe 17, 18 angeordnet sind. Die Ausführung dieser Wellenstümpfe 17, 18 ist insbesondere in Figur 9 zu erkennen. Die Wellenstümpfe 17, 18 füllen vollständig die Lagerstellen 15, 16 aus, ragen jedoch nur zur Befestigung des Drosselkörpers 3 in den Kanal. In Figur 9 ist entsprechend zu erkennen, dass sich im Querschnitt des Drosselkörpers 3 bei einem Schnitt in Höhe der Drehachse 4 senkrecht zum Drosselkörper 3 ein etwa u-förmiges Profil ergibt. Hierdurch kann der Strömungswiderstand im Kanal 2 bei geöffnetem Drosselkörper 3 gering gehalten werden und dennoch eine ausreichend feste Verbindung zwischen Wellenstumpf 17, 18 und Drosselkörper 3 geschaffen werden. Hierzu ist insbesondere auch darauf zu achten, dass möglichst keine zusätzlichen Kanten durch die Verbindung zwischen den Wellenstümpfen 17, 18 und dem Drosselkörper 3 entstehen, sondern ein sanfter Übergang von den Wellenstümpfen 17, 18 zum Drosselkörper 3 stattfindet.

Durch derartig geformte Drosselvorrichtungen wird es möglich, sowohl eine genaue Dosierung der geförderten Fluidmenge sicherzustellen, als auch eine kostengünstige Herstellung zu gewährleisten. Zudem wird ein vollständiger Verschluss des Kanals 2 in Schließstellung des Drosselkörpers 3 sichergestellt.

Es sollte klar sein, dass eine derartige Ausführungsform nicht auf eine montagegespritzte Drosselklappenvorrichtung beschränkt ist, sondern auch andere Spritzgießtechniken oder Druckgußtechniken gewählt werden können. Auch hier liegen Vorteile in der Herstellung durch die gewählte Form des Gehäuses 1.

Des Weiteren ist ersichtlich, dass aufgrund der exzentrischen Drehbewegung die Form der Innenwand an die Bewegung des Drosselkörpers 3 je nach Exzentrizität angepasst werden kann, um möglichst kleine Änderungen des freien Querschnitts zu erhalten und so eine genaue Fluidmengensteuerung zu ermöglichen. Entscheidend ist, dass sich im gesamten Bereich des Gehäuses 1 keine Hinterschnitte wie sonst üblich bei Kugelzonen befinden, sondern eine insgesamt stetig fortschreitende Erweiterung in eine Richtung gegeben ist. Dies ermöglicht eine Herstellung eines derartigen Fluid durchströmten Kanals 2 bzw. des Gehäuses 1 sowie dem darin angeordneten Drosselkörper 3 im Montagespritzverfahren, da die Entformung durch einfaches Herausziehen der Schieber problemlos erfolgen kann. Auch ist es selbstverständlich möglich eine derartige Drosselklappenvorrichtung in einem rechteckigen Kanal mit einem rechteckigen Drosselkörper herzustellen.

## Patentansprüche

1. Drosselklappenvorrichtung für eine Verbrennungskraftmaschine mit einem Gehäuse (1), in dem ein Fluid durchströmbarer Kanal (2) ausgebildet ist, in welchem ein Drosselkörper (3) angeordnet ist, welcher um eine Drehachse (4) schwenkbar ist, welche den Drosselkörper (3) in zwei Drosselflügel (5, 6) teilt, wobei der Drosselkörper (3) über eine Stellvorrichtung in Drehung versetzbar ist, wodurch der Drosselkörper (3) gegen eine Sitzfläche (8), die durch eine Innenwand (9) des Gehäuses (1) gebildet ist, und von der Sitzfläche (8) weg drehbar ist, wobei die Drehachse (4) axial zum Drosselkörper (3) versetzt angeordnet ist, so dass ein erster Drosselflügel (5) beim Öffnen des Kanals (2) in zur Drehachse (4) entgegen gesetzter Richtung schwenkt und ein zweiter Drosselflügel (6) in Richtung zur Drehachse (4) schwenkt, wobei eine radiale Umfangsfläche (7) des Drosselkörpers (3) zumindest abschnittsweise kugelschnittförmig ausgebildet ist, so dass der Drosselkörper (3) in der den Kanal verschließenden Position mit seiner kugelschnittförmigen Umfangsfläche (7) umlaufend gegen die Sitzfläche (8), die durch eine Innenwand (9) des Kanal (2) bildenden Gehäuses (1) gebildet ist, anliegt und dass sich in einem Abschnitt (10) der Querschnitt des Fluid durchströmbaren Kanals (2) in axialer Richtung von der Sitzfläche (8) zur Drehachse (4) erweitert und sich in einem Abschnitt (13) an der zur Drehachse (4) entgegen gesetzten Seite des Drosselkörpers (3) im geschlossenen Zustand der Querschnitt des Kanals (2) in Richtung zur Drehachse (4) an der Seite des ersten Flügels (5) erweitert, **dadurch gekennzeichnet, dass** die Drehachse radial zur Mitte des Drosselkörpers versetzt angeordnet ist und die radiale Umfangsfläche linienförmig gegen die Sitzfläche (8) anliegt.

2. Drosselklappenvorrichtung für eine Verbrennungskraftmaschine nach Anspruch 1, **dadurch gekennzeichnet, dass** die Abschnitte (10, 13) dem axial durchfahrenen Bereich bei Drehbewegung des Drosselkörpers (3) aus der Schließstellung um 10° Drehwinkel entsprechen.

3. Drosselklappenvorrichtung für eine Verbrennungskraftmaschine nach einem der Ansprüche 1 oder 2, **dadurch gekennzeichnet, dass** der Drosselkörper (3) mit einer Welle oder zwei gegenüberliegenden Wellenstümpfen (17, 18) im Kanal bildenden Gehäuse (1) im zumindest teilweise geöffneten Zustand montagegespritzt ist.

4. Drosselklappenvorrichtung für eine Verbrennungskraftmaschine nach einem der vorhergehenden Ansprüche, **dadurch gekennzeichnet, dass** der Drosselkörper (3) in Schließstellung senkrecht zur Kanalachse angeordnet ist.

5. Drosselklappenvorrichtung für eine Verbrennungskraftmaschine nach einem der vorhergehenden Ansprüche, **dadurch gekennzeichnet, dass** der Drosselkörper (3) einstückig mit zwei Wellenstümpfen (17, 18) hergestellt ist, die in zwei Lagerstellen (15, 16) des Gehäuses (1) gelagert sind, wobei die Wellenstümpfe (17, 18) derartig geformt sind, dass der Drosselkörper (3) mit den im Kanal (2) liegenden Abschnitten der Wellenstümpfe (17, 18) bei einem Schnitt entlang einer Schnittebene, die in Höhe der Drehachse (4) senkrecht durch den Drosselkörper (3) erfolgt, im wesentlichen U-förmig ausgebildet ist.

## Claims

1. Throttle valve unit for an internal combustion engine comprising a housing (1) in which a channel (2) is formed for a fluid to flow through, in which a throttle body (3) is arranged that is pivotable about an axis of rotation (4) that divides the throttle body (3) in two throttle wings (5, 6), said throttle body (3) being rotatable by means of an actuator device, whereby the throttle body (3) can be rotated against a seat surface (8) formed by an inner wall (9) of said housing (1), and away from said seat surface (8), said axis of rotation (4) being offset in the axial direction with respect to the throttle body (3) so that, when the channel (2) is opened, a first throttle wing (5) pivots in a direction opposite to the axis of rotation (4) and a second throttle wing (6) pivots towards the axis of rotation (4), wherein at least portions of the radial circumferential surface (7) of the throttle body (3) have a spherical section shape so that, in the position of channel closure, the spherical section-shaped circumferential surface (7) of the throttle body (3) abuts against the seat surface (8) formed by an inner wall (9) of the housing (1) forming the channel (2), and that, in one zone (10), the cross section of the channel (2) adapted to be flown through by fluid widens in the axial direction from the seat surface (8) to the axis of rotation (4) and that, in a zone (13) of the side of the throttle body (3) opposite the axis of rotation (4), the cross section of the channel (2) widens, in the closed condition, in the direction of the axis of rotation (4) on the side of the first wing (5), **characterized in that** the axis of rotation is arranged offset in the radial direction towards the centre of the throttle body and the radial circumferential surface abuts linearly against the seat surface (8).

2. Throttle valve unit for an internal combustion engine of claim 1, **characterized in that** the zones (10, 13) correspond to the portion traveled through in the axial direction upon a rotational movement of the throttle body (3) from the closed position through a rotational angle range of 10°.

3. Throttle valve unit for an internal combustion engine of one of claims 1 or 2, **characterized in that** the throttle body (3) is injection-mounted in an at least partly open condition in the housing (1) forming the channel, together with a shaft or two opposite shaft stubs (17, 18).

4. Throttle valve unit for an internal combustion engine of one of the preceding claims, **characterized in that**, in the closed position, the throttle body (3) is perpendicular to the channel axis.

5. Throttle valve unit for an internal combustion engine of one of the preceding claims, **characterized in that** the throttle body (3) is formed integrally with two shaft stubs (17, 18) which are supported at two bearing positions (15, 16) of the housing (1), the shaft stubs (17, 18) being shaped such that the throttle body (3) together with the portions of the shaft stubs (17, 18) situated in the channel (2) is substantially U-shaped when cut along a sectional plane extending at the level of the axis of rotation (4) and vertically through the throttle body (3).

## Revendications

1. Dispositif de vanne papillon pour un moteur à combustion interne comprenant un boitier (1) dans lequel est formé un canal (2) pour un fluide à s'écouler à travers le même, un corps papillon (3) étant disposé dans ledit canal, ledit corps étant pivotable autour d'un axe de rotation (4) divisant ledit corps papillon (3) en deux ailes de papillon (5, 6), ledit corps papillon (3) étant apte à être tourné par un dispositif actionneur, ledit corps papillon (3) ainsi étant tourné soit contre une face de siège (8), formée par une paroi interne (9) du boitier (1), soit dans la direction opposée à la face de siège (8), ledit axe de rotation (4) étant positionné décalé axialement par rapport au corps papillon (3) de manière que, lors de l'ouverture du canal (2), un premier aile de papillon (5) est pivoté dans la direction opposée à l'axe de rotation (4) et un deuxième aile de papillon (6) est pivoté vers l'axe de rotation (4), une face périphérique radiale (7) du corps papillon (3) est configurée, au moins dans des parties, selon une section sphérique de manière que ladite face périphérique (7) de forme d'une section sphérique dudit corps papillon (3), dans la position de fermeture du canal, reste de manière périphérique contre la face de siège (8) formée par une paroi (9) interne du boitier (1) formant ledit canal (2), et que, dans une zone (10), la section transversale du canal d'écoulement de fluide (2) s'élargit dans la direction axiale à partir de la face de siège (8) vers l'axe de rotation (4) et que, dans l'état fermé, la section transversale du canal (2) s'élargit, dans une zone (13) au côté du corps papillon (3) opposé à l'axe de rotation (4), vers ledit axe de rotation (4) sur le côté du premier aile (5), **caractérisé en ce que** l'axe de rotation est décalé radialement vers le centre du corps papillon et la surface périphérique radiale s'appui linéairement contre la face de siège (8).

2. Dispositif de vanne papillon pour un moteur à combustion interne selon la revendication 1, **caractérisé en ce que** les zones (10, 13) correspondent à la partie traversée par ledit corps papillon (3) pendant une rotation pour un angle de 10° à partir de la position de fermeture.

3. Dispositif de vanne papillon pour un moteur à combustion interne selon la revendication 1 ou 2, **caractérisé en ce que** le corps papillon (3) est monté par injection dans le boitier formant le canal (1), dans un état au moins partiellement ouvert, avec un arbre ou deux bouts d'arbre opposés (17, 18).

4. Dispositif de vanne papillon pour un moteur à combustion interne selon l'une quelconque des revendications précédentes, **caractérisé en ce que**, dans la position de fermeture, le corps papillon (3) est perpendiculaire à l'axe du canal.

5. Dispositif de vanne papillon pour un moteur à combustion interne selon l'une quelconque des revendications précédentes, **caractérisé en ce que** ledit corps papillon (3) est formé d'un seul tenant avec deux bouts d'arbre (17, 18) supportés à deux positions de support (15, 16) du boitier (1), lesdits bouts d'arbre (17, 18) étant formés de sorte que le corps papillon (3) avec les parties des bouts d'arbres (17, 18) situées dans le canal (2) sont sensiblement en forme de U si l'on applique une coupe selon un plan de coupe s'étendant, au niveau de l'axe de rotation, verticalement à travers le corps papillon (3).
